Europäisches Patentamt

European Patent Office

Office européen des brevets

(11) Veröffentlichungsnummer: **0 276 450**
**A1**

## EUROPÄISCHE PATENTANMELDUNG

(21) Anmeldenummer: **87118677.1**

(22) Anmeldetag: **16.12.87**

(51) Int. Cl.⁴: **G06F 12/14** , G06F 1/00

(30) Priorität: **23.01.87 CH 238/87**

(43) Veröffentlichungstag der Anmeldung:
**03.08.88 Patentblatt 88/31**

(84) Benannte Vertragsstaaten:
**AT BE CH DE ES FR GB GR IT LI LU NL SE**

(71) Anmelder: **XMIT AG**
**Neumattstrasse 7**
**CH-8953 Dietikon(CH)**

(72) Erfinder: **Rooks, Peter**
**Tischenloostrasse 50**
**CH-8800 Thalwil(CH)**

(74) Vertreter: **EGLI-EUROPEAN PATENT**
**ATTORNEYS**
**Horneggstrasse 4**
**CH-8008 Zürich(CH)**

(54) **Datenschutzschaltung zur Sperrung der Uebertragung von Signalen über einen Bus.**

(57) In einem Register (2) sind Codeschlossdaten als Festwerte gespeichert. Eine Dekodierschaltung (3) ist mit dem Register (2) zum Ablesen der Code-schlossdaten und mit einer Leitung (5) zum Erhalt von Codeschlüsseldaten aus einem zweiten Register (20) verbunden. In einer Dekodierschaltung (3) werden die Codeschlüsseldaten mit den Code-schlossdaten kombiniert: beim Vorliegen eines vor-bestimmten Ergebnisses der Kombination wird ein Freigabesignal auf einer betreffenden Leitung (6) er-zeugt. Auf einer Leitung (21-22-23) des Busses (8) ist eine Riegelschaltung (7) angeordnet, die über die Leitung (6) mit der Dekodierschaltung (3) verbunden ist. Die Riegelschaltung (7) lässt den Durchgang (21-22) von Signalen auf der Leitung (21-22-23) des Busses (8) nur beim Vorliegen eines Freigabesignals zu. Die Datenschutzschaltung (1) oder mindestens ein Teil davon (3) kann als programmierte, insbeson-dere als maskenprogrammierte kombinatorische Schaltung und noch besser als einmal elektrisch programmierbare kombinatorische Schaltung wie PROM, PAL und dergleichen ausgebildet sein.

Die Datenschutzschaltung eignet sich zum Schutz von ROM (26), Massenspeichern (28) und Datenfernübertragungswegen (29).

FIG. 2

## Datenschutzschaltung zur Sperrung der Übertragung von Signalen über einen Bus

Die Erfindung betrifft eine Datenschutzschaltung zur Sperrung der Übertragung von Signalen über mindestens eine Leitung eines Busses ausser beim Vorliegen von in der Datenschutzschaltung eine Übertragungsberechtigung ergebenden Daten, sowie mit einer solchen Datenschutzschaltung geschützte ROM (Festwertspeicher), Massenspeicher ("bulk storage, mass storage") und Datenfernübertragungswege ("communication lines").

Die Erfindung steht also im Zusammenhang mit der Uebertragung von Daten über eine oder mehrere Leitungen von einer Datenquelle zu einer Datensenke. Dabei kann es sich um eine Datenübertragung innerhalb eines Computers, zwischen Computern oder zwischen einem Computer und einem Peripheriegerät davon handeln.

Ein Computer besteht grundsätzlich aus einer Recheneinheit, welche eine Folge von Instruktionen der Reihe nach abarbeitet. Nach Ausführung einer Instruktion wird aus einem Speicher die nächste Instruktion geholt. Es gibt also einen Speicher, in welchem die Folge der auszuführenden Instruktionen (das Programm) gespeichert ist. Die Verbindung zwischen diesem Programmspeicher und der Recheneinheit stellt einen Uebertragungsweg dar, auf dem die Befehle für die Recheneinheit übertragen werden.

Während des Abarbeitens eines Programmes fallen Daten an (Ergebnisse von Operationen, von aussen eingelesene Grössen usw.), welche irgendwo gespeichert werden müssen. Es gibt also im Computer neben dem Programmspeicher einen Datenspeicher zur Aufnahme dieser Daten. Auch die Verbindung zwischen diesem Datenspeicher und der Recheneinheit stellt einen Datenübertragungsweg dar.

Normalerweise kommuniziert ein Computer auch mit seiner Umwelt. So können zwischen zwei oder mehr Computern Verbindungen bestehen, über welche beliebige Daten ausgetauscht werden können. Eine Vielzahl von Protokollen und Netzwerkarchitekturen regeln diese Zusammenarbeit zwischen Computern und deren Umwelt. Je nach der verwendeten Architektur bedeutet dies für den einzelnen Computer, dass er eine oder mehrere Schnittstellen aufweist, von denen jede gemäss einem bestimmten Protokoll arbeitet. Diese Schnittstellen, welche die Verbindung zu einem anderen Computer ermöglichen, bilden weitere Datenübertragunswege.

Sollen grössere Mengen von Daten gespeichert, dargestellt, gedruckt oder sonstwie weiterverarbeitet werden, so werden zu diesem Zweck periphere Geräte wie Drucker, Plotter, Massenspeicher, usw. eingesetzt. Auch für das Anschalten dieser Peripheriegeräte an einen Computer bestehen Vorschriften in Form von Architekturen und Protokollen. Somit bestehen auch zwischen Computer und Peripherie Datenübertragungswege.

Die vorstehend angegebenen Arten von Übertragungswegen für Daten und/oder Signale werden, wie auch noch andere hier nicht erwähnten Arten davon, allgemein in der Fachwelt und insbesondere im vorliegenden als Bus bezeichnet.

Alle vorstehend skizzierten Busse (und auch weitere, hier nicht beschriebene Busse) weisen folgende Eigenschaften auf: die Daten werden in Form von elektrischen Signalen übertragen, die Uebertragung kann sowohl in einer als auch in zwei Richtungen erfolgen, der Bus kann aus einer oder mehreren Leitungen bestehen, den einzelnen Leitungen oder Gruppen von Leitungen können spezielle Funktionen zugeordnet sein (z.B Adressenbus, Datenbus, Steuerleitungen usw.).

Aus verschiedensten Gründen kann es wünschenswert sein, bestimmte auf einem Bus übertragene Daten vor unerlaubtem Zugriff zu schützen. Beispiele sind: der Schutz vor dem Kopieren, der Schutz vor unerlaubter Benützung von bestimmten Ressourcen, der Schutz von vertraulichen Angaben über Personen oder Sachen, usw.

In der Fachliteratur werden viele Verfahren beschrieben, welche diesen Schutz für bestimmte Anwendungen gewährleisten. Diese Verfahren haben aber den Nachteil, dass sie entweder sehr aufwendig oder nur in genau vorbestimmten Fällen anwendbar sind.

Aufgabe der Erfindung ist es deshalb, eine Datenschutzschaltung der eingangs erwähnten Art anzugeben, welche sich auf eine Vielzahl von unterschiedlichen Bussen anwenden lässt und einfach zu implementieren ist, und deren Wirksamkeit sich dem geforderten Schutzgrad anpassen lässt.

Zur Lösung dieser Aufgabe wird eine erfindungsgemässe Datenschutzschaltung gekennzeichnet durch die in Anspruch 1 angegebene Kombination von Merkmalen. Vorteilhafte Ausbildungen der Erfindung ergeben sich aus den abhängigen Ansprüchen.

Im nachfolgenden werden Beispiele von Ausbildungen einer erfindungsgemässen Datenschutzschaltung unter Bezugnahme auf die Zeichnung näher beschrieben, wobei einander gleiche oder entsprechende Elemente in allen Figuren mit gleichen Bezugszeichen bezeichnet werden. Es zeigen:

Fig. 1 ein Blockschema zur Darstellung des Prinzips einer erfindungsgemässen Datenschutzschaltung, und

Fig. 2 ein Blockschema einer besonderen Ausbildung der erfindungsgemässen Datenschutzschaltung nach dem in Fig. 1 dargestellten Prinzip.

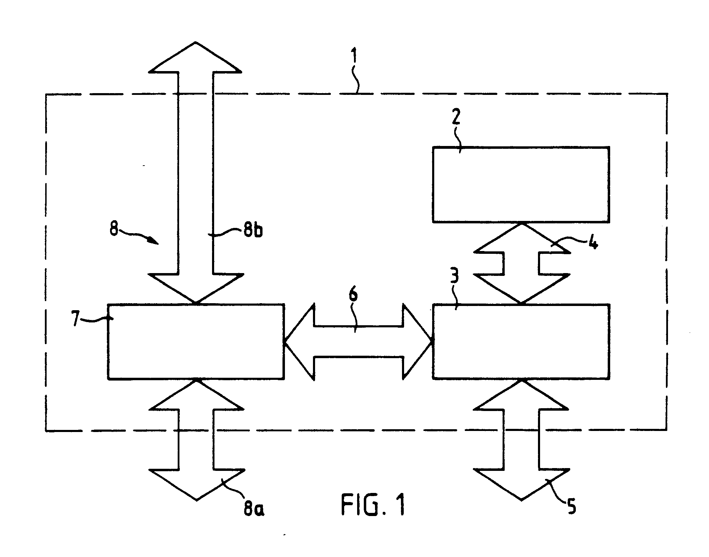

In Fig. 1 wird die erfindungsgemässe Datenschutzschaltung gesamthaft mit dem Rahmen 1 symbolisiert. In einem Register 2 werden Codeschlossdaten gespeichert. Diese Codeschlossdaten werden bei der Herstellung oder bei der Programmierung der Datenschutzschaltung definitiv in das Register eingeschrieben. Sie können einer Dekodierschaltung 3 über einen Bus 4 zugeführt werden. Codeschlüsseldaten können der Dekodierschaltung 3 über einen Bus 5 zugeführt werden. Diese Codeschlüsseldaten können aus verschiedenen Quellen stammen: sie können zusammen mit einem Selbststart-Programm ("Bootstrap") des Computers gespeichert sein und beim Starten des Computers eingelesen werden, sie können aus einem ungeschützten Teil des Programmspeichers eingelesen werden, sie können von aussen eingegeben werden, usw.

In der Dekodierschaltung 3 werden die Codeschlossdaten und die Codeschlüsseldaten nach einem vorbestimmten Algorithmus kombiniert. Wenn das Resultat dieser Kombination einem vorbestimmten Ergebnis entspricht, wird auf mindestens einer Leitung eines Busses 6 ein Freigabesignal oder gegebenenfalls eine Signalkombination mit der Bedeutung "Freigabe" erzeugt. Die Abwesenheit dieses Freigabesignals bzw. der entsprechenden Signalkombination hat die Bedeutung "Sperrung". Das Freigabesignal bzw. die entsprechende Signalkombination wird erst nach dem Zuführen von Codeschlüsseldaten zur Dekodierschaltung 3 und nach Vorliegen des vorbestimmten Ergebnisses der Kombination von Codeschlossdaten mit Codeschlüsseldaten erzeugt. Das Freigabesignal bzw. die entsprechende Signalkombination kann in der Dekodierschaltung 3 unterdrückt werden, was die entgegengesetzte Bedeutung "Sperrung" hat. Ferner verschwindet das Freigabesignal bzw. die entsprechende Signalkombination automatisch bei Ausfall der Speisung (Abschalten des Gerätes) und bei anderen vorbestimmten Ereignissen wie Rückstellung ("Reset") des Computers oder der Datenschutzschaltung usw.

Je nach Ausführung der Datenschutzschaltung 1 sind Codeschlossdaten und Codeschlüsseldaten mehr oder weniger umfangreich, sie können 1 Bit bis mehrere Bytes umfassen. Falls mehrere Bytes verwendet werden, kann die Dekodierschaltung 1 sequenziell arbeiten, d.h. es werden mehrere Bytes von Codeschlüsseldaten nacheinander mit den Codeschlossdaten kombiniert (wobei auch mehrere Bytes von Codeschlossdaten verwendet werden können). Nach jeder Kombination kann das vorbestimmte Teilergebnis überprüft werden. Bei Vorliegen eines falschen Teilergebnisses können geeignete Massnahmen eingeleitet, insbesondere die Freigabeprozedur abgebrochen werden. Bei sequenziellem Arbeiten der Dekodierschaltung kann auch die richtige Reihenfolge der verwendeten Codeschlüsseldaten als Kriterium für die Freigabe verwendet werden.

Das Freigabesignal bzw. die entsprechende Signalkombination mit der Bedeutung "Freigabe" kann aus einem oder mehreren Bits bestehen, welche eine Riegelschaltung 7 oder mehrere solche Riegelschaltungen steuern.

Die Riegelschaltung 7 ist zwischen zwei Armen 8a, 8b eines Busses 8 angeordnet: sie sperrt eine oder mehrere Leitungen des Busses 8, d.h. die Übertragung auf diesen Leitungen zwischen den Armen 8a, 8b, solange kein Freigabesignal bzw. die entsprechende Signalkombination mit der Bedeutung "Freigabe" anliegt. In einer Variante kann die Riegelschaltung 7 im gleichen Bus angeordnet sein, über welchen die Codeschlüsseldaten zugeführt werden, solange gewährleistet ist, dass der für die Uebertragung der Codeschlüsseldaten benötigte Teil 5 des Busses nicht durch die Riegelschaltung 7 blockiert wird.

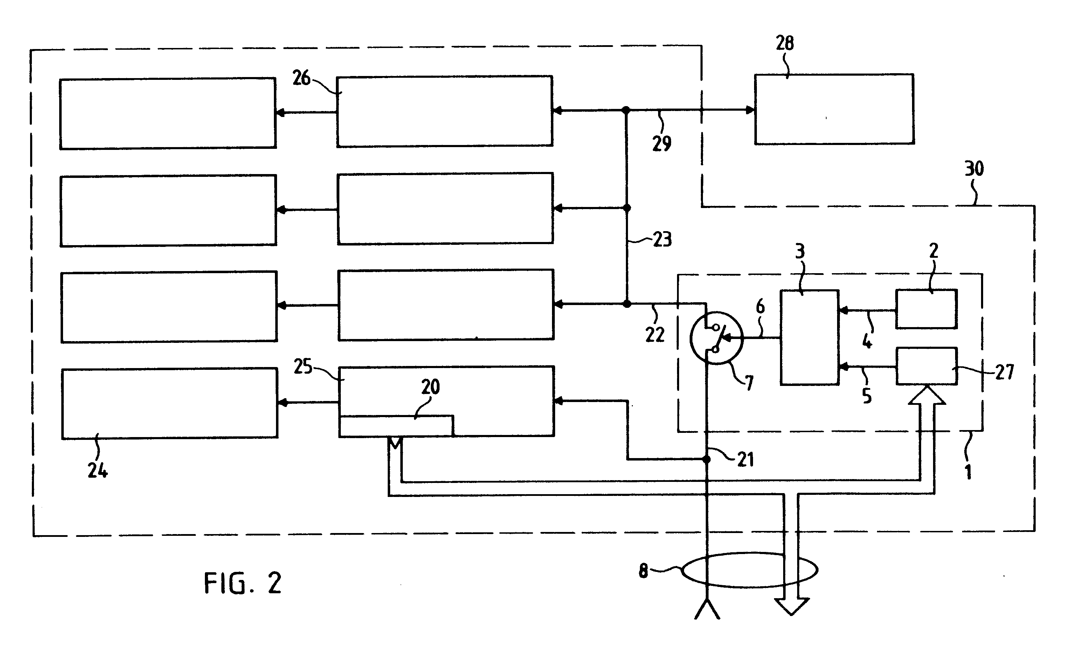

In Fig. 2 wird die erfindungsgemässe Datenschutzschaltung wiederum gesamthaft mit dem Rahmen 1 symbolisiert. Sie umfasst wiederum das Register 2, in dem Codeschlossdaten als Festwerte gespeichert sind, sowie die Dekodierschaltung 3, der die Codeschlossdaten über den Bus 4 zugeführt werden.

Über den Bus 5 können der Dekodierschaltung 3 Codeschlüsseldaten zugeführt werden. Im vorliegenden Beispiel ist eine serielle Übertragung sowohl der Codeschlossdaten als auch der Codeschlüsseldaten zur Dekodierschaltung 3 vorgesehen, so dass die Busse 4 und 5 aus jeweils nur einer Leitung bestehen und entsprechend dargestellt sind. Wiederum werden die Codeschlossdaten und die Codeschlüsseldaten in der Dekodierschaltung 3 nach einem vorbestimmten Algorithmus kombiniert. Wenn das Resultat dieser Kombination einem vorbestimmten Ergebnis entspricht, wird ein Freigabesignal erzeugt, das der Riegelschaltung 7 über den Bus 6 zugeführt wird. Im vorliegenden Beispiel besteht der Bus 6 aus nur einer Leitung und er ist entsprechend dargestellt. Das Freigabesignal steuert die Riegelschaltung 7, die symbolisch als einfacher Schalter dargestellt und zwischen zwei Armen 21, 22 einer Leitung 23 des Busses 8 angeordnet ist. Die Riegelschaltung 7 sperrt also die Leitung 23, d.h. den Durchgang von Signalen zwischen den Leitungsarmen 21 und 22, wenn in der Datenschutzschaltung 1 keine vorbestimmte, eine Übertragungsberechtigung ergebende Kombination von Codeschlossdaten und Codeschlüsseldaten vorliegt.

In dem in Fig. 2 dargestellten Beispiel sind die Codeschlüsseldaten in einem ungeschützten ROM (Festwertspeicher) 20 gespeichert, der Teil eines gesamten ROM ist, welcher aus einer Mehrzahl von ungeschützten ROM wie 24, 25 und von geschützten ROM wie 26 besteht. Das ungeschützte ROM 20 ist mit der Leitung 21 des Busses 8 stets verbunden. Diese Leitung 21 dient der Zuleitung eines Auslesebefehls für die Speicherstellen des ROM. Daher ist das ROM 20 vom Bus 8 aus stets lesbar. Die geschützten ROM wie 26 sind mit der Leitung 21 über die Riegelschaltung 7 verbunden, die den Durchgang eines Auslesebefehls für die Speicherstellen der geschützten ROM wie 26 sperrt, solange in der Datenschutzschaltung 1 nicht die vorbestimmte Kombination von Codeschlossdaten und Codeschlüsseldaten vorliegt. Daher sind die geschützten ROM wie 26 vom Bus 8 aus erst lesbar, wenn eine Übertragungsberechtigung vorliegt. Selbstverständlich können auch andere Leitungen des Busses 8 von der Riegelschaltung 7 gesichert werden als nur die Leitung 23 für den Auslesebefehl.

Aus Gründen der Übersichtlichkeit der Zeichnung sind die Datenleitungen zur Übertragung der ausgelesenen Daten nur für das ROM 20 als Verbindung zum Register 27 dargestellt, während die Datenleitungen zur Übertragung der aus dem restlichen Teil des ROM 25 und aus den ROM 24, 26 usw. ausgelesenen Daten nicht dargestellt sind. Somit ist der als ROM 20 bezeichnete Teil des ROM 25 als zweites Register ausgebildet, in welchem die Codeschlüsseldaten als Festwerte gespeichert sind.

Beim Erscheinen eines Auslesebefehls auf der Leitung 21 werden die Codeschlüsseldaten aus dem ROM oder zweiten Register 20 ausgelesen und den am Bus 8 angeschlossenen Schaltungen zur Verführung gestellt. Eine dieser mit dem Bus verbundenen Schaltungen bildet ein drittes Register 27, in welchem die im zweiten Register 20 gelesenen Codeschlüsseldaten zwischenspeicherbar sind, um zum richtigen Zeitpunkt für den Zugriff von der Dekodierschaltung 3 aus bereitzustehen.

Diese Ausbildung der erfindungsgemässen Datenschutzschaltung 1 kann beispielsweise dazu dienen, aus Gründen des Kopierschutzes festzustellen, ob der als zweites Register 20 ausgebildete Teil des ROM 24 die originale oder eine abgeänderte Version eines Programms enthält.

Beim bestimmungsgemässen Gebrauch der von der Datenschutzschaltung 1 geschützten Einrichtung und der im ROM enthaltenen Daten werden Codeschlüsseldaten vom zweiten Register 20 zum dritten Register 27 und von dort zur Dekodierschaltung 3 geführt. Daher können der zwischen dem zweitem Register 20 und dem dritten Register 27 angeordnete Teil des Busses 8 und der zwischen dem dritten Register 27 und der Dekodierschaltung 3 angeordnete Teil des Busses 8 beide als unidirektionale Verbindung ausgebildet werden. Auf diese Weise wird verhindert, dass ein Unbefugter versucht, Codeschlüsseldaten in das zweite Register 20 zu schreiben, um die Schutzwirkung der Datenschutzschaltung 1 zu umgehen.

Dabei kann die Datenschutzschaltung 1 und insbesondere ihr als Dekodierschaltung 3 wirkender Teil als programmierte kombinatorische Schaltung und besser noch als maskenprogrammierte kombinatorische Schaltung ausgebildet sein. Die Programmierung dieser kombinatorischen Schaltung erfolgt vorzugsweise einmalig und elektrisch, d.h. diese kombinatorische Schaltung ist vorzugsweise als PROM, PAL und dergleichen ausgebildet.

Gesamthaft bildet die vorstehend beschriebene und innerhalb des Rahmens 30 dargestellte Einrichtung einen mit Datenschutz versehenen und/oder gegen Kopieren gesicherten ROM.

Bei einem anderen, ebenfalls in Fig. 2 dargestellten Beispiel führt der Bus 8 auch noch zu einem geschützten Massenspeicher ("bulk storage, mass storage") 28, beispielsweise ein Plattenspeichersystem, der sich ausserhalb der Einrichtung 30 befindet. Dabei ist die Riegelschaltung 7 zwischen der Leitung 21 und einer zu diesem Massenspeicher 28 führenden Leitung 29 des Busses 8 angeordnet, beispielsweise um einem dem Massenspeicher 28 zugeordneten Schreib-/Lesebefehl zu sperren. Der Teil des Busses 8, der hier von Interesse ist, ist dabei als von der Einrichtung 30 zum Massenspeicher 28 führender Datenübertragungsbus ausgebildet. Wiederum können selbstverständlich auch andere Leitungen des Busses 8 von der Riegelschaltung 7 gesichert werden als nur die Leitung 29 für den Schreib-/Lesebefehl des Massenspeichers 28.

Bei noch einem anderen, aus Fig. 2 erkennbarem Beispiel führt der Bus 8 auch noch als Datenfernübertragungsweg beispielsweise zu einem Terminal oder zu einem anderen Computer (DTE "data terminal equipment", DCE "data communications equipment"). Dabei ist, um die Übertragung eines der Signale für die Kennzeichnung der Sende-oder Empfangsbereitschaft zu sperren, die Riegelschaltung 7 zwischen der Leitung 21 und einer Leitung 29 angeordnet, die hier eine Leitung dieses Datenfernübertragungsweges ist. Der Teil des Busses 8, der hier von Interesse ist, ist dabei als Datenfernübertragungsweg ausgebildet, der von der Einrichtung 30 herausführt. Wiederum können selbstverständlich auch andere Leitungen des Busses 8 von der Riegelschaltung 7 gesichert werden als nur die Leitung 29 für die Feststellung der Sende-oder Empfangsbereitschaft.

## Ansprüche

1. Datenschutzschaltung zur Sperrung der Übertragung von Signalen über mindestens eine Leitung eines Busses (8) ausser beim Vorliegen von in der Datenschutzschaltung eine Übertragungsberechtigung ergebenden Daten, gekennzeichnet durch

mindestens ein Register (2), in welchem Codeschlossdaten als Festwerte gespeichert sind,

eine mit mindestens einer Leitung (5) zum Erhalt von Codeschlüsseldaten und mit dem Register (2) zum Ablesen von Codeschlossdaten verbundene Dekodierschaltung (3), welche eintreffende Codeschlüsseldaten mit im Register gelesenen Codeschlossdaten kombiniert und beim Vorliegen eines vorbestimmten Ergebnisses der Kombination mindestens ein Freigabesignal auf einer betreffenden Leitung (6) erzeugt, und

mindestens eine Riegelschaltung (7), die auf mindestens einer Leitung des Busses (8) angeordnet und über die Leitung (6) für das Freigabesignal mit der Dekodierschaltung (3) verbunden ist, und die den Durchgang (8a-8b; 21-22) von Signalen auf dieser Leitung des Busses nur beim Vorliegen eines dieser Riegelschaltung zugeordneten Freigabesignals auf der betreffenden Leitung (6) zulässt.

2. Datenschutzschaltung nach Anspruch 1, dadurch gekennzeichnet, dass sie (1) oder mindestens ein Teil davon (3) als programmierte kombinatorische Schaltung ausgebildet ist.

3. Datenschutzschaltung nach Anspruch 2, dadurch gekennzeichnet, dass sie (1) oder mindestens ein Teil davon (3) als maskenprogrammierte kombinatorische Schaltung ausgebildet ist.

4. Datenschutzschaltung nach Anspruch 2, dadurch gekennzeichnet, dass sie (1) oder mindestens ein Teil davon (3) als einmal elektrisch programmierbare kombinatorische Schaltung wie PROM, PAL und dergleichen ausgebildet ist.

5. Datenschutzschaltung gemäss Anspruch 1, gekennzeichnet durch mindestens einen ungeschützten ROM (Festwertspeicher) (24, 25), der mit dem Bus (8) verbunden und mit von diesem Bus aus stets lesbaren Speicherstellen versehen ist, und durch eine Ausbildung mindestens eines Teiles dieses ROM als zweites Register (20), in welchem die Codeschlüsseldaten als Festwerte gespeichert sind.

6. Datenschutzschaltung gemäss Anspruch 5, gekennzeichnet durch ein drittes Register (27), das mit dem Bus (8) verbunden ist und in welchem die im zweiten Register (20) gelesenen Codeschlüsseldaten speicherbar sind, um für den Zugriff von der Dekodierschaltung (3) aus bereitzustehen.

7. Datenschutzschaltung gemäss Anspruch 6, gekennzeichnet durch eine Ausbildung des zwischen dem zweitem (20) und dem dritten Register (27) angeordneten Teils des Busses (8), der Codeschlüsseldaten vom zweiten zum dritten Register führt, als unidirektionale Verbindung, und durch eine Ausbildung des zwischen dem dritten Register (27) und der Dekodierschaltung (3) angeordneten Teils des Busses (8), der Codeschlüsseldaten vom dritten Register zur Dekodierschaltung führt, als unidirektionale Verbindung.

8. Mit einer Datenschutzschaltung gemäss einem der Ansprüche 5 bis 7 geschützter ROM, gekennzeichnet durch eine Anordnung der Riegelschaltung (7) auf mindestens einer Leitung (23) des Busses, auf welcher ein Auslesebefehl für den geschützten ROM (26) übertragen wird.

9. Mit einer Datenschutzschaltung gemäss einem der Ansprüche 5 bis 7 geschützter Massenspeicher ("bulk storage, mass storage") (28), gekennzeichnet durch eine Anordnung der Riegelschaltung (7) auf mindestens einer zu diesem Massenspeicher führenden Leitung (29) eines Datenübertragungsbusses (8).

10. Mit einer Datenschutzschaltung gemäss einem der Ansprüche 5 bis 7 geschützter Datenfernübertragungsweg ("communications line"), gekennzeichnet durch eine Anordnung der Riegelschaltung (7) auf mindestens einer Leitung (29) eines Busses, der Teil des Datenfernübertragungsweges ist.

FIG. 1

FIG. 2

# EUROPÄISCHER RECHERCHENBERICHT

Europäisches Patentamt

Nummer der Anmeldung

EP 87 11 8677

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 128 874 (PERTL et al.) <br> * Figur 4; Spalte 4, Zeilen 21-60 * <br> --- | 1 | G 06 F 12/14 <br> G 06 F 1/00 |
| A | EP-A-0 109 504 (PIAZZA) <br> * Zusammenfassung * <br> ----- | 1 | |

RECHERCHIERTE SACHGEBIETE (Int. Cl.4)

G 06 F 1/00
G 06 F 12/14
G 07 C 9/00

Der vorliegende Recherchenbericht wurde für alle Patentansprüche erstellt

| Recherchenort | Abschlußdatum der Recherche | Prüfer |
|---|---|---|
| DEN HAAG | 21-04-1988 | MOENS R.A.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)